# EUROPEAN PATENT SPECIFICATION

(11) **EP 3 050 147 B1**
(45) Date of publication and mention of the grant of the patent: **01.05.2019**
(21) Application number: 14845729.4
(22) Date of filing: 22.09.2014
(51) Int. Cl.: H01M 8/0258, H01M 8/0223

(54) **BIPOLAR PLATE DESIGN WITH NON-CONDUCTIVE FRAMING ELEMENT**
ENTWURF FÜR EINE BIPOLARE PLATTE MIT NICHTLEITENDEN RAHMEN
CONCEPTION DE PLAQUE BIPOLAIRE AVEC CADRE NON CONDUCTEUR

(30) Priority: 23.09.2013 US 201361881041 P
(43) Date of publication of application: 03.08.2016
(60) Divisional application: 19158872.2
(73) Proprietor: Lockheed Martin Energy, LLC, Berthesda MD 20817 (US)
(72) Inventor: WARRINGTON, Curtis, Acton, MA 01720 (US); GREBENYUK, Oleg, Sherborn, MA 01770 (US); BADRINARAYANAN, Paravastu, Cypress, TX 77429 (US); MADDEN, Thomas, H., Glastonbury, CT 06033 (US)
(74) Representative: Epping - Hermann - Fischer
(86) International application number: PCT/US2014/056766
(87) International publication number: WO 2015/042520

(56) References cited:
- WO-A1-2010/033118
- WO-A1-2012/177255
- DE-A1-102011 120 802
- JP-A- 2008 078 104
- US-A1- 2004 224 190
- US-A1- 2005 098 435
- US-A1- 2007 037 037
- US-A1- 2010 047 650

## Description

### CROSS REFERENCE TO RELATED APPLICATIONS

### TECHNICAL FIELD

The present invention relates to separators for use in energy storage devices, including flow batteries. More particularly, the invention relates to bipolar separator plates and methods for their construction.

### BACKGROUND

Electrochemical cells, including flow battery cells, using separator membranes, can be configured in cell stacks having bipolar separator plates between adjacent cells. These bipolar separator plates are typically made from either a variety of metals, such as titanium and stainless steel, or non-metallic conductors, such as graphitic carbon / polymer composites. Bipolar separator plates can be made by molding or machining fluid flow fields into a solid sheet of the material. The flow fields can be made up of a series of channels or grooves, generally in serpentine or interdigitated flow fields, that allow passage of liquids within the bipolar separator plates. In most cases, these patterned plates have porous flow media superposed on them to act as support structures for electrodes, or to act as electrodes themselves, and provide for some degree of fluidic interconnectivity between adjacent channels. But because of the complexity required to manufacture flow fields with these features, framed separator plates are still expensive to produce. Separator plates are disclosed in documents DEI0-2011-120802 and JP2008078104.

The present invention seeks to address some of these deficiencies.

### SUMMARY

The present invention is defined in the appended claims and directed to fluid flow assemblies, each assembly comprising: a conductive element disposed within a non-conductive element; the non-conductive element being characterized as framing the conductive central element and the elements together defining a substantially planar surface when engaged with one another; each of the conductive and non-conductive elements comprising channels which, when taken together, form a flow pattern on the substantially planar surface; and wherein the channels are interconnected, restricted, terminated, or any combination thereof by features within the non-conductive element. The flow pattern may constitute a serpentine or interdigitated flow field pattern, but the assemblies are distinguished in that the conductive element consists essentially of a series of substantially parallel channels, and any features associated with interconnecting the channels or restricting, terminating, or both restricting and terminating the channels are positioned within the non-conductive element.

### BRIEF DESCRIPTION OF THE DRAWINGS

The present application is further understood when read in conjunction with the appended drawings. For the purpose of illustrating the subject matter, there are shown in the drawings exemplary embodiments of the subject matter; however, the presently disclosed subject matter is not limited to the specific methods, devices, and systems disclosed. In addition, the drawings are not necessarily drawn to scale. In the drawings:

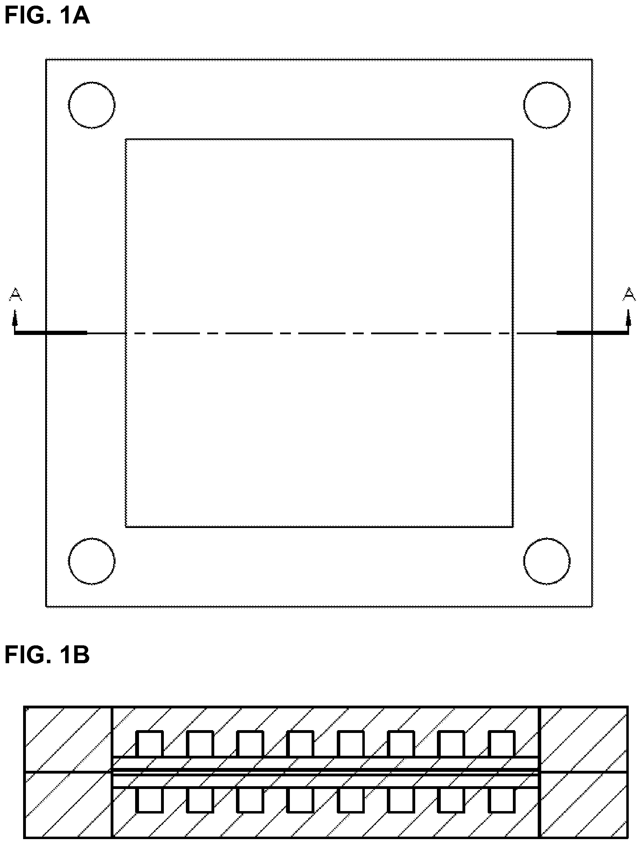

**FIG. 1A** depicts a top view of one exemplary embodiment of a bipolar plate. **FIG. 1B** depicts a side view of one exemplary embodiment of a bipolar plate

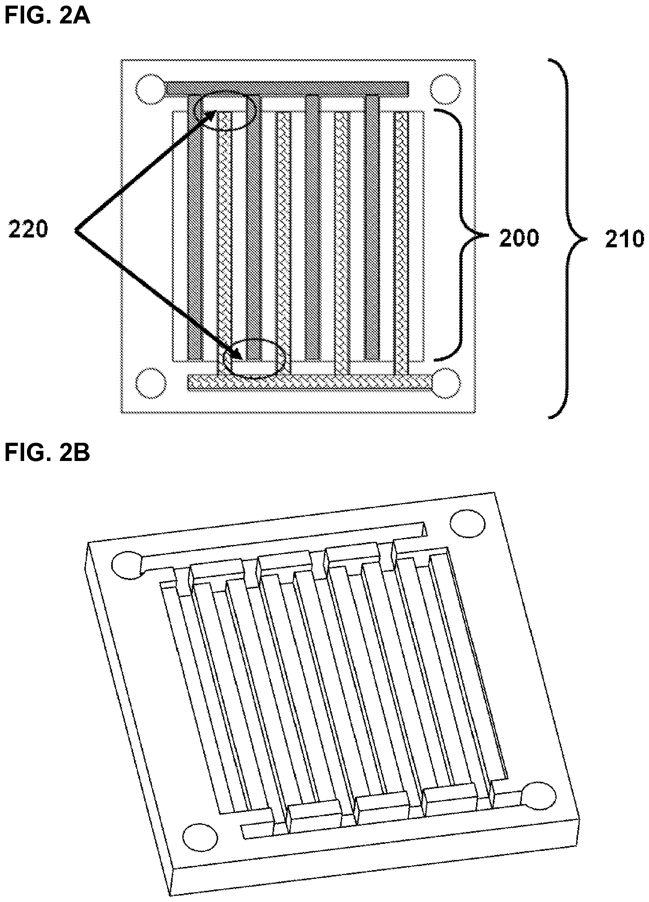

**FIG. 2A** depicts a top view of an interdigitated flow field of a bipolar plate, comprising a conductive plate **200** framed by a non-conductive frame **210,** where the channels of the flow field butt up against the non-conductive frame, **220.** **FIG. 2B** illustrates an oblique view of **FIG. 2A****.**

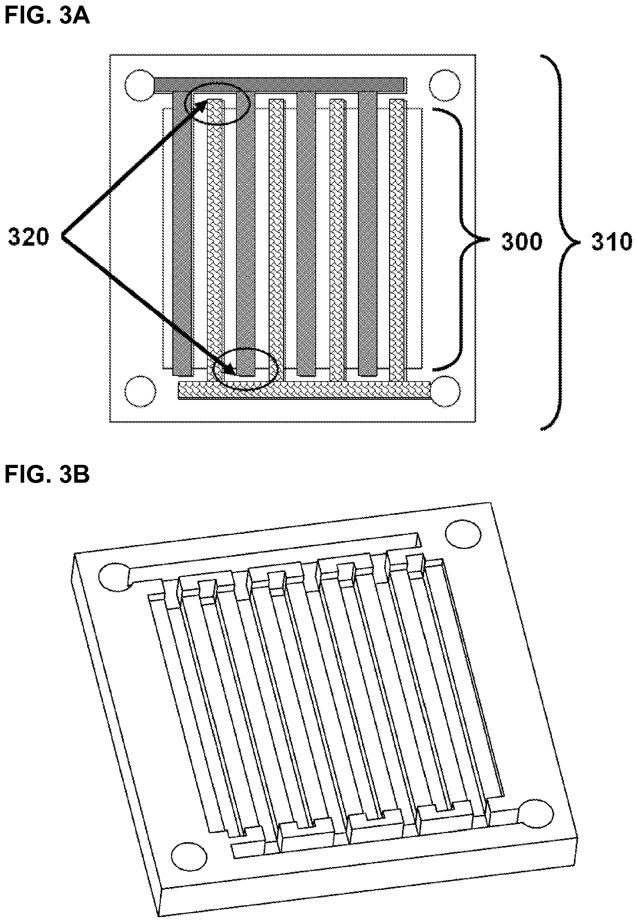

**FIG. 3A** depicts a top view of an interdigitated flow field of a bipolar plate, comprising a conductive plate **300** framed by a non-conductive frame **310,** wherein the channels of the flow field terminate within the non-conductive frame, **320.** **FIG. 3B** illustrates an oblique view of **FIG. 3A****.**

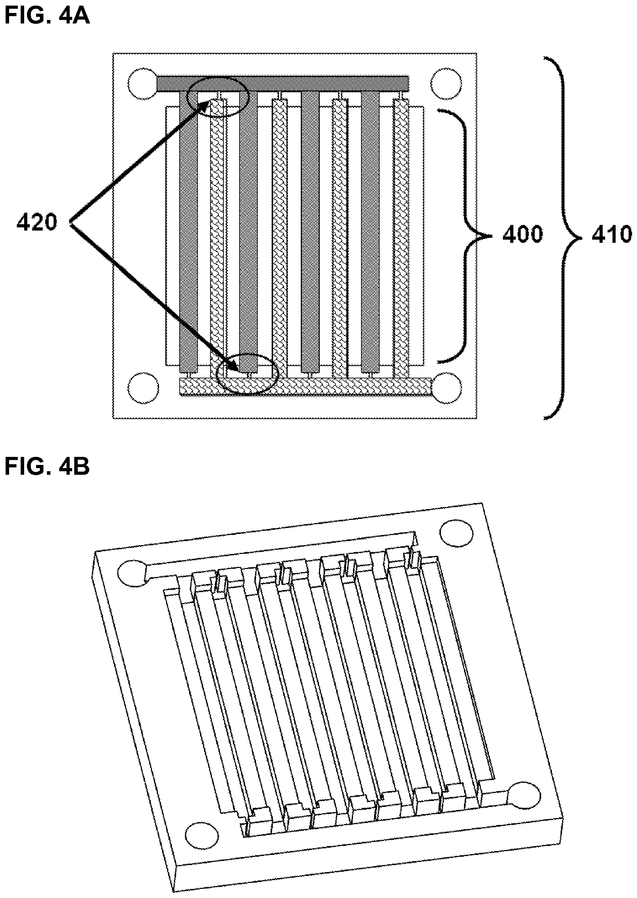

**FIG. 4A** depicts a top view of an interdigitated flow field of a bipolar plate, comprising a conductive plate **400** framed by a non-conductive frame **410,** wherein the channels of the flow field are width-restricted within the non-conductive frame, **420.** **FIG. 4B** illustrates an oblique view of **FIG. 4A****.**

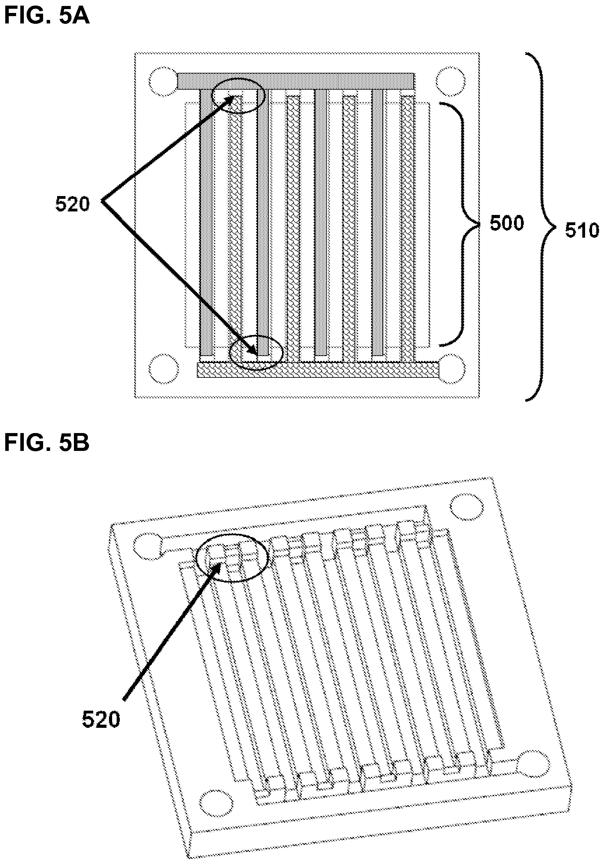

**FIG. 5A** depicts a top view of an interdigitated flow field of a bipolar plate, comprising a conductive plate **500** framed by a non-conductive frame **510,** wherein the channels of the flow field are height-restricted (step-wise gradient) within the non-conductive frame, **520.** **FIG. 5B** illustrates an oblique view of **FIG. 5A****.**

### DETAILED DESCRIPTION OF ILLUSTRATIVE EMBODIMENTS

The present disclosure may be understood more readily by reference to the following description taken in connection with the accompanying Figures and Examples, all of which form a part of this disclosure. It is to be understood that this disclosure is not limited to the specific products, methods, conditions or parameters described and / or shown herein, and that the terminology used herein is for the purpose of describing particular embodiments by way of example only and is not intended to be limiting of any claimed disclosure. Similarly, unless specifically otherwise stated, any description as to a possible mechanism or mode of action or reason for improvement is meant to be illustrative only, and the invention herein is not to be constrained by the correctness or incorrectness of any such suggested mechanism or mode of action or reason for improvement. Throughout this text, it is recognized that the descriptions refer both to methods of operating a device and systems and to the devices and systems providing said methods. That is, where the disclosure describes and/or claims a method or methods for operating a flow battery, it is appreciated that these descriptions and/or claims also describe and/or claim the devices, equipment, or systems for accomplishing these methods.

It is to be appreciated that certain features of the invention which are, for clarity, described herein in the context of separate embodiments, may also be provided in combination in a single embodiment. That is, unless obviously incompatible or specifically excluded, each individual embodiment is deemed to be combinable with any other embodiment(s) and such a combination is considered to be another embodiment. Conversely, various features of the invention that are, for brevity, described in the context of a single embodiment, may also be provided separately or in any sub-combination. Further, while an embodiment may be described as part of a series of steps or part of a more general structure, each said step or part may also be considered an independent embodiment in itself. Additionally, while the embodiments described in the present disclosure are described in terms of flow batteries, it should be appreciated that these embodiments may be used in other configurations of electrochemical devices requiring stacks of cells, including but not limited to sealed batteries, fuel cells, and electrolyzers. This also includes electrochemical devices that serve a rebalancing function in a flow battery system.

Certain embodiments of the current invention provide fluid flow assemblies, each assembly comprising:
a conductive element disposed within a non-conductive element;
the non-conductive element, or a plurality of non-conductive elements, being characterized as framing the conductive central element and the elements together defining at least one substantially planar surface when engaged with one another;
each of the conductive and non-conductive elements comprising channels which, when taken together, form a flow pattern on the substantially planar surface; and
wherein the channels are interconnected, restricted, terminated, or any combination thereof by features at or within the non-conductive element. Separate embodiments provide that the channels are interconnected, restricted, terminated, or any combination thereof by features at the non-conductive element and within the non-conductive element.

As used herein, the terms "conductive" and "non-conductive" refers to electrical conductivity and non-conductivity, respectively. Neither conductive nor non-conductive elements are necessary constrained by the choice of material of construction, so long as they fulfill this feature of electrical conductivity or non-conductivity, respectively. For example, the conductive elements may comprise carbon, metal, or metal-coated non-conductive substrates or composites comprising polymers filled with conductive particles or fibrils (e.g., carbon particles or fiberils or metal particles). The non-conductive elements typically comprise organic polymers, preferably moldable polymers, and more preferably injection molded polymers. Exemplary materials include injection moldable thermoplastics such as, but not limited to, polyethylene (PE), poly-vinyl chlorides (PVC), and acrylonitrile butadiene styrene (ABS). Also included are polymer composites with filler materials added for minimization of creep under load, and/or minimization of thermal expansion differences with the conductive element. Candidate filler materials include, but are not limited to, glass or other metal oxides. These plastics or plastic composites are excellent materials in that they are sufficiently rigid, non-conductive, and can be manufactured by inexpensive injection molding methods.

In certain embodiments, the channels of the conductive elements may be interconnected to one another on an individual basis or on a plurality basis. In the former case, for example, alternating neighboring channels may be connected at each end of the flow path to one another by individual interconnections within the non-conductive element. In the latter case, multiple channels may be connected in fluid communication at each end by a plenum or manifold within the non-conductive element. The terms "plenum" and manifold" may be used interchangeably, to reflect a common pool of fluid feeding multiple flow channels within the first conductive element.

In certain of these embodiments, the channels are restricted, terminated, or both restricted and terminated by features within the non-conductive element. In other embodiments, these restriction, termination, or both restriction and termination features provide an assembly which, during operation, promote convective flow within the conductive element that is substantially out of the planar surface; i.e., into a porous electrode assembly which is superposed on the conductive element. The overall flow pattern of the assembly may constitute, e.g., a serpentine flow field pattern, an interdigitated flow field pattern, or a combination thereof, but the inventive assemblies are distinguished in that the conductive element consists essentially of a series of substantially parallel channels, and any elements associated with interconnecting the channels or restricting, terminating, or both restricting and terminating the channels are positioned solely within the non-conductive element.

As used herein, the term "substantially planar surface when engaged with one another" refers to a geometry in which at least one surface of the conductive and non-conductive elements are practically co-planar with one another. The conductive and non-conductive surfaces do not have to be exactly planar, and indeed the conductive surface may be slightly recesed within the non-conductive surface, so long as when engaged with one another, there is fluid communication between the channels of the conductive element and the features of the non-conductive element. In some cases, it may be desirable to provide a conductive surface that is slightly recessed with respect to the non-conductive surface, and capableof accommodating a fluid diffusion medium superposed on the conductive element, the recess being sized so that the flow media is compressed to the desired degree when under compression in the stack assembly. In some cases, it may be desirable to provide a non-conductive framing element that is substantially non-planar with the conductive element. The non-conductive framing element may have interlocking features that provide, for example, cell alignment features or features that improve fluidic transport, as long as there is fluid communication between the elements and when taken together, the assembly may be arranged into a stack of individual assemblies. The flow media may comprise metal, carbon, polymeric binder, and be constructed of woven cloth, nonwoven felt, paper, expanded or reticulated vitreous foam, perforated sheets, or expanded mesh. The flow media may be formed of graphitized poly-acrylonitrile (PAN) fibers bound together in a non-woven structure by graphitized resin, or in a woven cloth or felt structure that may or may not involve some degree of resin binding. Alternately, the flow media may be bonded to the top surface of the conductive element.

In certain embodiments, the non-conductive frame comprises at least one internal tunnel or tunnel system within the structure of the frame. In such embodiments, the frame may form a flat external surface and be configured such that the bases of the flow channels of the conductive element align with the bases of these internal flow features of the non-conductive frame and the flow channel tops optionally align with the flat external region of the frame. Such tunnels within the non-conductive frame can be formed by laminating together individual sheets of plastic, or by 3-D photo processes, lost core injection molding, or investment casting.

The term "when engaged with one another" connotes that the conductive and non-conductive elements may exist as separate elements until assembly. The different elements may be engaged by adhesives, snap fitting or other fasteners (e.g., screws or pins), permanently or semi-permanently bonded using, for example, laser or ultrasonic welding or adhesives such as epoxies, or simply held in place by the stacking of multiple assemblies adjacent to one another. It should be apparent that the degree of engagement should be sufficient to ensure that the degree of fluid communication between the conductive and non-conductive surfaces is sufficient for it intended purpose. Also, depending on the nature of the engagement, elastomeric sealing may be employed to maintain the fluid of interest within that plane, since bipolar flow battery stacks involve a dis-similar fluid on the opposing side of the bipolar separator plate.

It is envisioned that the non-conductive element frames the periphery of the first conductive element, such that the conductive element defines an area that essentially conforms to an inner space of the non-conductive element. In alternative embodiments, the non-conductive element may border the conductive element on 2 or 3 sides, provided that the ends of the channels within the conductive element are addressed by the necessary interconnecting, restricting, or terminating features of the non-conductive element.

As described above, in some embodiments, the conductive element comprises or consists essentially of a plurality of substantially parallel flow channels. The dimensions of these channels is not theoretically important, but for practical reasons of high fluid densities, preferably have widths on the micron or millimeter scale (e.g., ranging from about 100 to about 1000 microns, from about 1 millimeter to about 10 millimeters, or some combination thereof). Alternately, relatively few channels of very wide widths may, e.g. from about 10 millimeters to about 100 millimeters, may be deployed. In certain embodiments, at least a portion, and preferably all, of the plurality of substantially parallel flow channels has substantially parallel sidewalls. These flow channels may also be coated with hydrophobic or hydrophilic coatings within the channel to enhance flow velocity or turbulence. Depending on the materials of constructions, the plurality of substantially parallel flow channels may be formed by gang milling or by molding to a final net or near net shape. Gang milling is a process that uses an array of cutters to produce parallel features in a part. Gang milling dramatically reduces machining time and cost, but requires very simple geometries. Neither serpentine nor interdigitated flow fields can be gang milled efficiently, but for the architectures of assembly described herein. Substantially parallel flow channels also facilitate reduced mold complexity, which may lead to reduced mold costs and mold wear.

Examples of cell designs of the present invention include those shown in **FIGs. 2A-B****,** **3A-B****,** **4A-B****,** and **5A-B****.** As shown in these figures, the non-conductive frame (**200, 300, 400,** and **500**) makes up the entirety of the cell outside of the active area (**210, 310, 410**, and **510**). This reduces the cost of stack components by replacing the bipolar plate material outside of the active area with a component that can be manufactured by inexpensive molding methods out of inexpensive plastic or plastic composite materials, as described above. In cell designs with a non-conductive frame made from injection molded plastic, additional features can be added to the plastic component at very little additional cost, for example manifolds, through-holes, and ports for minimizing shunt currents. Tooling costs may be slightly higher, but these are very quickly amortized over the high volumes for repeat parts in typical flow battery stacks involving tens or hundreds of cells. Adjacent flow channels are already connected through the diffusion layer, so the fit between bipolar plate and non-conductive cell frame must only be tight enough to discourage flow. The fluid resistance at the interface between bipolar plate and non-conductive cell frame must be less than the down-channel fluid resistance and may be approximately the same order as the fluid resistance to an adjacent flow channel through the diffusion layer.

**FIGs. 3A-B****,** **4A-B****,** and **5A-B** particularly illustrate the concept of restricting or terminating the channels within the non-conductive element, and are compared with the features of **FIGs. 2A-B****.** In particular, the reader is directed to elements **220, 320, 420,** and **520** of **FIG. 2A****,** **FIG. 3A****,** **FIG. 4A****,** and **FIG. 5A-B****,** respectively. **FIG. 2A** illustrates a device comprising a conductive element **200** framed by a non-conductive element **210.** The conductive element **200** comprises substantially parallel flow channels (shown as shaded tracks), where the flow channels of the flow field butt up and terminate against, but not within, the non-conductive frame, **220,** so as to provide an interdigitated flow field. As the fluid passes the length of the shaded channels, it decelerates as it nears the end of each channel. To improve the consistency by which fluid is delivered to the electrochemically active area over the conductive bipolar plate, it is advantageous to avoid this. By contrast, **FIG. 3A****,** **FIG. 4A****,** and **FIG. 5A** illustrate devices in which the interdigitated flow field is defined by **320, 420,** and **520,** in which the corresponding terminations or restrictions, respectively, are provided by the non-conductive element. In each of **FIG. 3A****,** **FIG. 4A****,** and **FIG. 5A****,** the fluid dead end happens outside of the active area. This helps improve the uniformity of fluid distribution. In **FIG. 4A** and **FIG. 5A****,** elements **420** and **520,** respectively, show partial restrictions of the fluid flow rather than the full obstruction depicted in **FIG. 2A** or **FIG. 3A****.** In the case of **FIG. 4A****,** the width of the channels are restricted. It should be appreciated that the degree of width restrictions (either by number of steps or degree of restriction) may be the same or different for each individual channel. **FIG. 5A-B** is shows a single step-wise restriction of the height of the channel within the non-conductive element. Again, it should be appreciated that the number, degree, or both number and degree of height restrictions may be the same or different for each individual channel. It should also be appreciated that other combinations of at least one step and continuous gradients may provide restrictions within the height of a given channel. It should further be appreciated that any combination of horizontal (width) and vertical (height) steps or gradients may provide the restrictions described herein. Further, the degree of restriction may reduce the width or height of the respective channel by an amount in a range of from about 10% to about 90% of either the width or height or both, relative to the width or height of the respective channel. In other embodiments, this degree of restriction may reduce the width or height or both by an amount in a range of from about 20% to about 40%, of from about 40% to 60%, of from about 60% to about 80%, or a combination thereof. This gradient concept is advantageous to reducing the overall pressure loss through the cell, while still forcing a nominal amount of fluid out of the planar surface and through the diffusion media. Note that the illustrated terminations or restrictions provided by the non-conductive element are not necessarily to scale.

To this point, the fluid assemblies have been described, for the most part, individually, but it should be appreciated that they may be used preferably stacked on one another, in the constructions of at least two and upwards of about 50, about 100, or about 200 fluid flow assembly devices. Further, such assemblies may be used either to circulate gases or liquids, or a combination thereof, in electrochemical devices which include fuel cells, flow batteries, electrolysis stacks, and combinations thereof. When stacked against one another, it may be preferred in some instances to orient adjacent assemblies, which together with electrodes and a separator comprise a single cell, vertically and such that the array of substantially parallel channels of one assembly is positioned oblique, and preferably at 90° to the array of substantially parallel channels of the neighboring assembly. Alternately, the adjacent assemblies may be oriented with channels aligned, in either a vertical or horizontal orientation. In such instances, one assembly may have channel dimensions that are wider than the opposing, adjacent assembly, such that the channels these channels are aligned within the wider channels.

In further embodiments, the fluid flow assembly devices may be incorporated into electrochemical devices, including fuel cells, flow batteries, and electrolysis stacks, which themselves are incorporated into larger systems, for example, including cell stacks, storage tanks and pipings for containing and transporting the electrolytes, control hardware and software (which may include safety systems), and at least one power conditioning unit as part of an energy storage system. In such systems, the storage tanks contain the electroactive materials. The control software, hardware, and optional safety systems include all sensors, mitigation equipment and electronic/hardware controls and safeguards to ensure safe, autonomous, and efficient operation of the flow battery or other energy storage system.

Such storage systems may also include a power conditioning unit at the front end of the energy storage system to convert incoming and outgoing power to a voltage and current that is optimal for the energy storage system or the application. For the example of an energy storage system connected to an electrical grid, in a charging cycle the power conditioning unit would convert incoming AC electricity into DC electricity at an appropriate voltage and current for the electrochemical stack. In a discharging cycle the stack produces DC electrical power and the power conditioning unit converts to AC electrical power at the appropriate voltage and frequency for grid applications. Such energy storage systems of the present invention are well suited to sustained charge or discharge cycles of several hour durations. As such, the systems of the present invention are suited to smooth energy supply/demand profiles and provide a mechanism for stabilizing intermittent power generation assets (e.g. from renewable energy sources). It should be appreciated, then, that various embodiments of the present invention include those electrical energy storage applications where such long charge or discharge durations are valuable. For example, non-limiting examples of such applications include those where systems of the present invention are connected to an electrical grid include, so as to allow renewables integration, peak load shifting, grid firming, baseload power generation / consumption, energy arbitrage, transmission and distribution asset deferral, weak grid support, and/or frequency regulation. Additionally the devices or systems of the present invention can be used to provide stable power for applications that are not connected to a grid, or a micro-grid, for example as power sources for remote camps, forward operating bases, off-grid telecommunications, or remote sensors.

The following embodiments are intended to complement, rather than supplant, those embodiments already described.
Embodiment 1. A fluid flow assembly, comprising:
   a conductive element disposed within a non-conductive element;
   the non-conductive element being characterized as framing the conductive central element and the elements together defining a substantially planar surface when engaged with one another;
   each of the conductive and non-conductive elements comprising channels which, when taken together, form a flow pattern on the substantially planar surface; and
   wherein the channels are restricted, terminated, or both restricted and terminated at or within the non-conductive element.
Embodiment 2. The fluid flow assembly of Embodiment 1, wherein the restrictions in the non-conductive element result in convective flow within the conductive element that is substantially out of the planar surface.
Embodiment 3. The fluid flow assembly of Embodiment 1 or 2, wherein at least one of the flow channels or the entire flow pattern is an interdigitated flow pattern.
Embodiment 4. The fluid flow assembly of any one Embodiments 1 to 3, wherein the conductive element comprises a plurality of substantially parallel flow channels.
Embodiment 5. The fluid flow assembly of Embodiment 4, wherein at least a portion of the plurality of substantially parallel flow channels has substantially parallel sidewalls.
Embodiment 6. The fluid flow assembly of Embodiment 4, wherein the substantially parallel flow channels each has substantially parallel sidewalls.
Embodiment 7. The fluid flow assembly of any one of Embodiments 4 to 6, wherein the plurality of substantially parallel flow channels are formed by a machining operation involving more than one tool performing parallel cuts simultaneously, such as gang milling.
Embodiment 8. The fluid flow assembly of any one of Embodiments 4 to 6, wherein the plurality of substantially parallel flow channels are formed by molding to a final net or near net shape.
Embodiment 9. The fluid flow assembly of any one of Embodiments 1 to 8, wherein the flow pattern comprises:
   the first conductive element comprising a plurality of substantially parallel flow channels;
   the second non-conductive element comprising at least one plenum or manifold;
   each plenum or manifold being in fluid communication with two or more of the substantially parallel flow channels of the first conductive element.
Embodiment 10. The fluid flow assembly of any one of Embodiments 1 to 9, wherein the non-conductive element comprises a molded plastic, a molded plastic composite, or a combination thereof.
Embodiment 11. The fluid flow assembly of any one of Embodiments 1 to 10, wherein the conductive plate has a recess which accepts fluid diffusion media, the recess being sized so that the flow media is either compressed to the desired degree when pressed against the flat side of the adjoining plate or is attached to the conductive plate in a desired manner.
Embodiment 12. The fluid flow assembly of Embodiment 11, wherein the flow media comprises metal, carbon, polymeric binder, and is constructed of woven cloth, nonwoven felt, paper, expanded or reticulated vitreous foam, perforated sheets, or expanded mesh.
Embodiment 13. An energy storage system comprising the fluid flow assembly of any one of Embodiments 1 to 12.

## Claims

1. A fluid flow assembly, comprising:
a conductive element disposed within a non-conductive element;
the non-conductive element being characterized as framing the conductive central element and the elements together defining a substantially planar surface when engaged with one another;
each of the conductive and non-conductive elements comprising channels which, when taken together, form a flow pattern on the substantially planar surface; and
wherein the channels are restricted, terminated, or both restricted and terminated at or within the non-conductive element, **characterised in that** the the channels are restricted, terminated, or both restricted and terminated by the non-conductive element, and the conductive element and non-conductive element together form a conductive plate.

2. The fluid flow assembly of claim 1, wherein at least one of the flow channels or the entire flow pattern is an interdigitated flow pattern.

3. The fluid flow assembly of claim 1, wherein the conductive element comprises a plurality of substantially parallel flow channels.

4. The fluid flow assembly of claim 3, wherein at least a portion of the plurality of substantially parallel flow channels has substantially parallel sidewalls.

5. The fluid flow assembly of claim 3, wherein the substantially parallel flow channels each has substantially parallel sidewalls.

6. The fluid flow assembly of claim 3, wherein the plurality of substantially parallel flow channels are formed by a machining operation involving more than one tool performing parallel cuts simultaneously, such as gang milling.

7. The fluid flow assembly of claim 3, wherein the plurality of substantially parallel flow channels are formed by molding to a final net or near net shape.

8. The fluid flow assembly of claim 1, wherein the flow pattern comprises: the first conductive element comprising a plurality of substantially parallel flow channels; the second non-conductive element comprising at least one plenum; each plenum being in fluid communication with two or more of the substantially parallel flow channels of the first conductive element.

9. The fluid flow assembly of claim 1, wherein the non-conductive element comprises a molded plastic.

10. The fluid flow assembly of claim 1, wherein the conductive plate has a recess which accepts fluid diffusion media, the recess being sized so that the flow media is compressable to the desired degree when pressed against the flat side of an adjoining plate.

11. The fluid flow assembly of claim 10, wherein the flow media comprises metal, carbon, polymeric binder.

12. The fluid flow assembly of claim 10, wherein the flow media is constructed of woven cloth, nonwoven felt, paper, expanded or reticulated vitreous foam, perforated sheets, or expanded mesh.

13. An energy storage system comprising the fluid flow assembly of claim 1.

## Patentansprüche

1. Fluidströmungsanordnung, aufweisend:
ein leitfähiges Element, das innerhalb eines nichtleitenden Elements angeordnet ist;
wobei sich das nichtleitende Element dadurch auszeichnet, dass es das leitfähige zentrale Element rahmenartig umgibt, und die Elemente zusammen im Eingriff miteinander eine im Wesentlichen ebene Oberfläche definieren;
wobei das leitfähige und nichtleitende Element jeweils Kanäle aufweist, die zusammengenommen eine Strömungsstruktur auf der im Wesentlichen ebenen Oberfläche bilden; und
wobei die Kanäle an oder innerhalb des nichtleitenden Elements begrenzt sind oder enden oder sowohl begrenzt sind als auch enden, **dadurch gekennzeichnet, dass**
die Kanäle durch das nichtleitende Element begrenzt sind oder enden oder sowohl begrenzt sind als auch enden, und das leitfähige Element und das nichtleitende Element zusammen eine leitfähige Platte bilden.

2. Fluidströmungsanordnung nach Anspruch 1, wobei mindestens einer der Strömungskanäle oder die gesamte Strömungsstruktur eine fingerförmig ineinandergreifende Strömungsstruktur darstellt.

3. Fluidströmungsanordnung nach Anspruch 1, wobei das leitfähige Element eine Vielzahl von im Wesentlichen parallelen Strömungskanälen aufweist.

4. Fluidströmungsanordnung nach Anspruch 3, wobei zumindest ein Teil der Vielzahl von im Wesentlichen parallelen Strömungskanälen im Wesentlichen parallele Seitenwände aufweist.

5. Fluidströmungsanordnung nach Anspruch 3, wobei die im Wesentlichen parallelen Strömungskanäle jeweils im Wesentlichen parallele Seitenwände aufweisen.

6. Fluidströmungsanordnung nach Anspruch 3, wobei die Vielzahl von im Wesentlichen parallelen Strömungskanälen durch einen Bearbeitungsvorgang gebildet wird, bei dem von mehr als einem Werkzeug gleichzeitig parallele Schnitte durchgeführt werden, wie z.B. Gruppenfräsen.

7. Fluidströmungsanordnung nach Anspruch 3, wobei die Vielzahl von im Wesentlichen parallelen Strömungskanälen durch Formen zu einem endgültigen Netz oder einer nahezu netzartigen Gestalt gebildet wird.

8. Fluidströmungsanordnung nach Anspruch 1, wobei die Strömungsstruktur aufweist: das erste leitfähige Element, das eine Vielzahl von im Wesentlichen parallelen Strömungskanälen aufweist; das zweite nichtleitende Element, das mindestens einen Verteilerraum aufweist;
wobei jeder Verteilerraum mit zwei oder mehr der im Wesentlichen parallelen Strömungskanäle des ersten leitfähigen Elements in Fluidverbindung steht.

9. Fluidströmungsanordnung nach Anspruch 1, wobei das nichtleitende Element einen Formkunststoff aufweist.

10. Fluidströmungsanordnung nach Anspruch 1, wobei die leitfähige Platte eine Aussparung aufweist, die ein Fluiddiffusionsmedium aufnimmt, wobei die Aussparung so bemessen ist, dass das Strömungsmedium, wenn es gegen die flache Seite einer angrenzenden Platte gedrückt wird, bis zu einem gewünschten Grad zusammengedrückt werden kann.

11. Fluidströmungsanordnung nach Anspruch 10, wobei das Strömungsmedium Metall, Kohlenstoff und ein polymeres Bindemittel aufweist.

12. Fluidströmungsanordnung nach Anspruch 10, wobei das Strömungsmedium aus Webstoff, Vliesfilz, Papier, expandiertem oder vernetztem Glasschaum, perforierten Lagen oder einem expandiertem Netz aufgebaut ist.

13. Energiespeichersystem, umfassend die Fluidströmungsanordnung nach Anspruch 1.

## Revendications

1. Ensemble d'écoulement de fluide, comprenant :
un élément conducteur disposé à l'intérieur d'un élément non conducteur ;
l'élément non conducteur étant **caractérisé en ce qu'**il encadre l'élément conducteur central, et les éléments définissant ensemble une surface sensiblement plane lorsqu'ils sont en prise les uns avec les autres ;
chacun des éléments conducteur et non conducteur comprenant des canaux qui, pris ensemble, forment un schéma d'écoulement sur la surface sensiblement plane ; et
sachant que les canaux sont restreints, terminés, ou à la fois restreints ou terminés au niveau de ou à l'intérieur de l'élément non conducteur,
**caractérisé en ce que** les canaux sont restreints, terminés, ou à la fois restreints et terminés par l'élément non conducteur, et l'élément conducteur et l'élément non conducteur forment ensemble une plaque conductrice.

2. L'ensemble d'écoulement de fluide de la revendication 1, sachant qu'au moins un des canaux d'écoulement ou l'entièreté du schéma d'écoulement est un schéma d'écoulement interdigité.

3. L'ensemble d'écoulement de fluide de la revendication 1, sachant que l'élément conducteur comprend une pluralité de canaux d'écoulement sensiblement parallèles.

4. L'ensemble d'écoulement de fluide de la revendication 3, sachant qu'au moins une partie de la pluralité de canaux d'écoulement sensiblement parallèles comporte des parois latérales sensiblement parallèles.

5. L'ensemble d'écoulement de fluide de la revendication 3, sachant que les canaux d'écoulement sensiblement parallèles comportent chacun des parois latérales sensiblement parallèles.

6. L'ensemble d'écoulement de fluide de la revendication 3, sachant que la pluralité de canaux d'écoulement sensiblement parallèles sont formés par une opération d'usinage impliquant plus d'un outil effectuant des découpes parallèles simultanément, comme un usinage par fraises montées en train.

7. L'ensemble d'écoulement de fluide de la revendication 3, sachant que la pluralité de canaux d'écoulement sensiblement parallèles sont formés par moulage en une forme aux cotes ou près des cotes.

8. L'ensemble d'écoulement de fluide de la revendication 1, sachant que le schéma d'écoulement comprend : le premier élément conducteur comprenant une pluralité de canaux d'écoulement sensiblement parallèles ; le deuxième élément non conducteur comprenant au moins une chambre d'expansion ;
chaque chambre d'expansion étant en communication fluidique avec deux ou plus des canaux d'écoulement sensiblement parallèles du premier élément conducteur.

9. L'ensemble d'écoulement de fluide de la revendication 1, sachant que l'élément non conducteur comprend un plastique moulé.

10. L'ensemble d'écoulement de fluide de la revendication 1, sachant que la plaque conductrice présente un évidement qui accueille un moyen de diffusion de fluide, l'évidement étant dimensionné de telle sorte que le moyen d'écoulement soit comprimable au degré souhaité lorsqu'il est appuyé contre le côté plat d'une plaque attenante.

11. L'ensemble d'écoulement de fluide de la revendication 10, sachant que le moyen d'écoulement comprend du métal, du carbone, un liant polymère.

12. L'ensemble d'écoulement de fluide de la revendication 10, sachant que le moyen d'écoulement est constitué d'étoffe tissée, de feutre non tissé, de papier, de mousse vitreuse expansée ou réticulée, de feuilles perforées, ou de maille expansée.

13. Système de stockage d'énergie comprenant l'ensemble d'écoulement de fluide de la revendication 1.
